# FASCICULE DE BREVET EUROPEEN

(11) **EP 2 475 479 B1**
(45) Date de publication et mention de la délivrance du brevet: **17.07.2013**
(21) Numéro de dépôt: 10761034.7
(22) Date de dépôt: 10.08.2010
(51) Int. Cl.: B21K 1/08, F16C 3/10

(54) **VILEBREQUIN CREUX A PLAN DE JOINT DECALE**
HOHLE KURBELWELLE MIT VERSETZTER TRENNEBENE
HOLLOW CRANKSHAFT HAVING AN OFFSET JUNCTION PLANE

(30) Priorité: 07.09.2009 FR 0956061; 22.01.2010 FR 1050435
(43) Date de publication de la demande: 18.07.2012
(73) Titulaire: Peugeot Citroën Automobiles SA, 78140 Vélizy-Villacoublay (FR); Forges de Courcelles, 52800 Nogent (FR)
(72) Inventeur: GAENG, Philippe, F-78420 Carrières Sur Seine (FR); BOUJON, Philippe, F-52000 Chaumont (FR); SCHAFER, Cyril, F-52800 Marnay-Sur-Marne (FR)
(74) Mandataire: Ménès, Catherine
(86) Numéro de dépôt international: PCT/FR2010/051687
(87) Numéro de publication internationale: WO 2011/027063

(56) Documents cités:
- DE-A1- 3 729 992
- FR-A1- 2 802 591
- JP-A- 53 057 173
- JP-U- 55 036 781
- "LEICHTBAU IM KURBELTRIEB DURCH GESCHMIEDETE KOMPONENTEN", UMFORMTECHNIK, MEISENBACH, BAMBERG, DE, vol. 33, no. 3, 1 septembre 1999 (1999-09-01), pages 18-20,22, XP000878277, ISSN: 0300-3167
- HAATS J ET AL: "LIGHTWEIGHT CRANKSHAFT DRIVES BY FORGING", STEEL TIMES, FUEL & METALLURGICAL JOURNALS LTD. LONDON, GB, vol. 227, no. 9, 1 septembre 1999 (1999-09-01), page 346/347, XP000865498, ISSN: 0039-095X

## Description

La présente invention revendique la priorité de la demande française 0956061 déposée le 07 Septembre 2009 et la priorité de la demande française 1050435 déposée le 22 Janvier 2010 dont le contenu (texte, dessins et revendications) est ici incorporé par référence.

L'invention concerne un vilebrequin creux à plan de joint décalé par rapport au plan de symétrie axiale, un moteur et un véhicule équipé de ce vilebrequin ainsi que le procédé de fabrication d'un tel vilebrequin.

La fonction d'un vilebrequin consiste au travers d'un système bielles - manivelle à transformer les mouvements rectilignes alternatifs des pistons en un mouvement rotatif continu. Aux extrémités, coté « queue de vilebrequin » se situe la poulie de distribution et à l'opposé coté plateau le volant moteur.

De manière classique, les motorisations les moins sollicitées sont équipées de vilebrequins en fonte, tandis que pour les pièces plus chargées, les critères de tenue font choisir des solutions en acier forgé.

En fonctionnement, le vilebrequin est soumis à différents types de contrainte :
- de flexion, qui sont concentrées dans les gorges de raccordement (efforts des bielles)
- de torsion, qui sollicitent principalement les milieux des tourillons et les orifices de graissage
- des vibrations de torsion et de flexion
- d'usures des paliers et manetons ou des matériaux antagonistes en relation avec la lubrification.

Les vilebrequins qui équipent les moteurs des véhicules actuels sont des pièces généralement fabriquées en une seule pièce par exemple forgées à la presse ou coulées. La matière utilisée telle que la fonte, l'acier est de ce fait présente dans toutes les sections de la pièce ce qui nécessite de réaliser au cours des opérations d'usinage des orifices de passage pour l'huile permettant de lubrifier les paliers et les manetons présents sur le vilebrequin.

Du fait des formes pleines d'un tel vilebrequin, celui-ci présente généralement un poids important qu'il n'est pas possible de réduire sans toucher à la géométrie et aux dimensions des formes extérieures du vilebrequin.

Un vilebrequin acier présente ainsi une masse d'environ 12 à 15 kg, soit environ 10% de la masse du moteur. Le potentiel en gain de masse est significatif si l'on peut supprimer une partie de la matière dans le centre des manetons et tourillons, la matière dans ces zones étant peu rentable pour la rigidité et la tenue du vilebrequin.

De manière à réduire le poids d'une telle pièce, on a proposé dans FR 2 802 591 de réaliser un vilebrequin mécanosoudé constitué d'un certain nombre d'éléments individuels pourvus de cavités en leur intérieur réduisant ainsi le poids et assemblés les uns aux autres pour constituer le vilebrequin. Les éléments individuels sont ainsi assemblés par des soudures s'étendant transversalement à l'axe du vilebrequin. Un tel vilebrequin s'il présente un poids plus intéressant présente aussi des risques de rupture au niveau des soudures sous l'effet des contraintes de torsion.

Dans "LEICHTBAU IM KURBELTRIEB DURCH GESCHMIEDETE KOMPONENTEN", UMFORMTECHNIK, MEISENBACH, BAMBERG, DE, vol. 33, no. 3, 1 septembre 1999 (1999-09-01), pages 18-20,22, XP000878277ISSN: 0300-3167, on a proposé de réaliser un vilebrequin dans lequel l'assemblage s'effectue par soudage des deux pièces forgées assemblées bord à bord selon l'axe longitudinal et dans le plan de symétrie axial du vilebrequin.

On a proposé également de réaliser un vilebrequin à l'aide de deux pièces de tôle embouties puis soudées entre elles avec des joints d'assemblage orientés le long du vilebrequin comme cela est notamment décrit dans FR 2 020 149. L'assemblage des deux pièces peut être réalisé par soudage par résistance sous pression ou il peut également être réalisé par emmanchement des pièces l'une sur l'autre par frettage.

Un tel procédé de fabrication permet donc d'obtenir un vilebrequin creux dans lequel la matière se trouve réduite à celle constituant la paroi extérieure du vilebrequin tandis que la totalité de la section intérieure demeure disponible pour une circulation d'huile, par exemple. On obtient ainsi un gain de poids intéressant. Toutefois, l'assemblage par frettage est relativement complexe à mettre en oeuvre et en outre la résistance d'un vilebrequin ainsi assemblé peut ne pas être suffisante.

On préfère donc des vilebrequins dans lesquels l'assemblage s'effectue par soudage ou brasage des deux pièces assemblées bord à bord selon l'axe longitudinal et dans le plan de symétrie axial du vilebrequin.

Toutefois, on a pu s'apercevoir que de tels assemblages ne présentent pas toujours des qualités suffisantes en termes de résistance.

Par ailleurs, le plan de soudage des deux demi-coquilles s'étend le long de l'axe longitudinal du vilebrequin et dans le plan de symétrie axial dudit vilebrequin passant par les sommets des manetons. On a pu alors se rendre compte après essai au banc moteur que la pièce est cassée au niveau des zones soudées (en plusieurs endroits). Ceci est notamment dû au fait que le cordon de soudure est localisé au niveau des zones les plus sollicitées, le plan de soudure traversant les zones de contrainte maximale du vilebrequin et tout défaut de soudure est alors un facteur aggravant pour la tenue du vilebrequin.

L'invention a donc pour but de pallier ces inconvénients et de réaliser un vilebrequin creux, léger, constitué d'au moins deux pièces ou demi-coquilles obtenues par forgeage, et qui, assemblées, définissent une section intérieure creuse dudit vilebrequin permettant une circulation d'huile de lubrification par exemple ainsi qu'un allégement de la pièce, et qui soit de plus capable de transmettre un couple important tout en pouvant être fabriqué de manière relativement simple et économiquement avantageuse.

A cet effet, l'invention a pour objet un vilebrequin creux présentant un plan de symétrie axial, constitué d'au moins deux pièces principales creuses obtenues par forgeage et assemblées par soudage selon l'axe longitudinal du vilebrequin, caractérisé en ce que les deux pièces principales sont assemblées l'une à l'autre selon un plan longitudinal et perpendiculaire au plan de symétrie axial du vilebrequin, chaque pièce comportant au moins un demi-tourillon, au moins un contrepoids et au moins un maneton partiel, un maneton partiel complémentaire étant assemblé sur chaque maneton partiel des pièces principales selon un plan d'assemblage s'étendant parallèlement au plan d'assemblage des pièces principales.

De manière avantageuse, un tel assemblage par soudure des deux pièces principales creuses obtenues par forgeage, tel que par estampage, est faiblement sollicité d'un point de vue fonctionnel. En effet, les deux pièces ou demi-coquilles peuvent posséder des « ponts de matière » servant à maintenir les éléments et à assurer le dimensionnel du vilebrequin lors de l'assemblage des demi-coquilles. Ces « ponts » ont donc la même longueur que les manetons et ces ponts sont ensuite destinés à être tronçonné après assemblage.

De manière avantageuse, les manetons et les tourillons sont obtenus creux directement à l'issu du procédé de forgeage grâce à des formes simples et peuvent être nettoyés. La communication entre maneton et tourillon nécessite le perçage des conduits de lubrification. Les perçages des conduits de lubrification peuvent être réalisés de manière à rendre le circuit d'huile multi-entrée/multi-sortie (circuit de lubrification classique) ou mono-entrée, multi-sortie.

De manière avantageuse, un vilebrequin selon l'invention permet d'obtenir un vilebrequin creux dont le gain en masse ne nuit nullement à la tenue mécanique.

L'invention concerne également un moteur équipé d'un vilebrequin selon l'invention ainsi qu'un véhicule équipé d'un tel moteur.

L'invention a également pour objet un procédé de fabrication d'un vilebrequin selon l'invention dans lequel on forge deux pièces principales creuses comportant chacune au moins un demi-tourillon, au moins un contrepoids et au moins un maneton partiel de sorte que lesdites pièces sont assemblables l'une à l'autre selon un plan d'assemblage perpendiculaire au plan de symétrie axiale du vilebrequin, on assemble lesdites pièces principales selon ledit plan d'assemblage, et on assemble sur chaque maneton partiel un maneton partiel complémentaire obtenu par forgeage, également selon un plan d'assemblage s'étendant parallèlement au plan d'assemblage des pièces principales.

De préférence, les pièces sont obtenues par estampage.

On décrira maintenant l'invention plus en détails en référence au dessin dans lequel :

La figure 1 représente une vue en coupe longitudinale des pièces à l'état brut suivant le plan X-X' constituant un vilebrequin pour moteur quatre cylindres selon l'invention ;

La figure 2 représente une vue en coupe longitudinale suivant le plan X-X' d'un vilebrequin pour moteur quatre cylindres assemblé selon l'invention avant tronçonnage des ponts ; et

La figure 3 représente une vue en coupe longitudinale suivant le plan X-X' d'un vilebrequin pour moteur deux cylindres assemblé selon l'invention ;

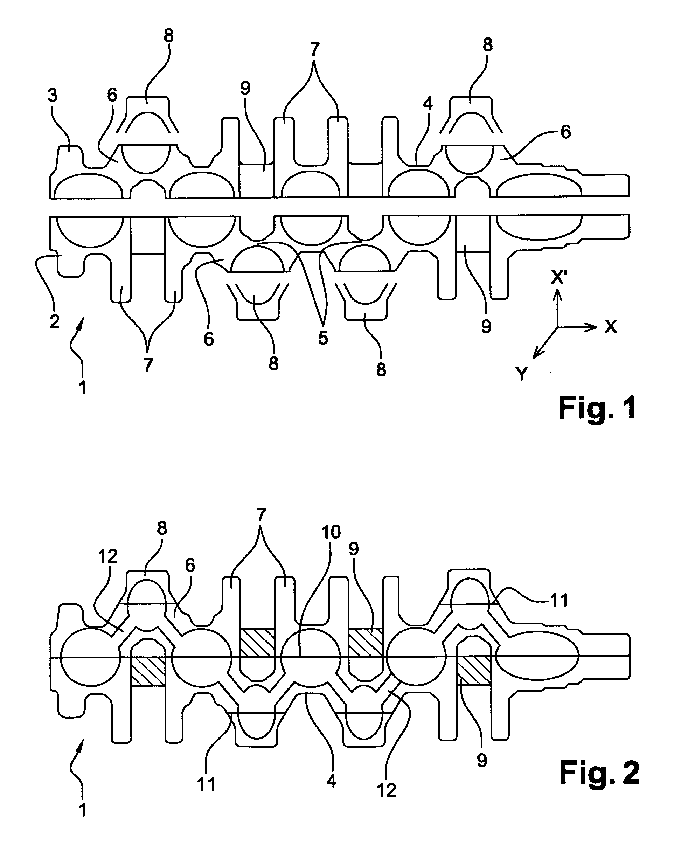

A la figure 1 est représenté un vilebrequin 1 pour un moteur à quatre cylindres réalisé en acier et composé de plusieurs parties qui sont ensuite soudées. Chacune des pièces constituant un tel vilebrequin 1 est obtenu par un forgeage.

Comme on peut le voir, à la figure 1, un vilebrequin 1 comporte cinq tourillons 4, quatre manetons 5, 8, des bras 6 s'étendant entre un tourillon 4 et un maneton 5, 8 et huit contrepoids 7 associés à l'opposé de chaque maneton 5, 8. Pour simplifier le vilebrequin, on peut également limiter le nombre des contrepoids à quatre, un seul contrepoids étant en regard d'un maneton. Un tel vilebrequin 1 présente un plan de symétrie axiale x,x' (ici le plan de la feuille).

Les parties élémentaires constituant un vilebrequin 1 sont représentées de manière éclatée à la figure 1. Le vilebrequin 1 à quatre manetons 5 est constitué ainsi de deux pièces principales 2, 3 ou demi-coquilles assemblables l'une à l'autre selon l'axe longitudinal du vilebrequin 1.

Ces deux parties 2, 3 sont réalisées par forgeage de sorte que le plan d'assemblage 10 de ces deux parties 2, 3 s'étend dans un plan longitudinal x,y perpendiculaire au plan de symétrie axiale x, x' du vilebrequin 1.

Ainsi, ces deux pièces 2, 3 différentes l'une de l'autre, présente chacune deux manetons 5 partiels, de préférence un demi-maneton, et quatre contrepoids 7 de sorte que l'assemblage des pièces 2, 3 permet la mise en regard d'un maneton partiel 5 de l'une des pièces et de deux contrepoids 7 de l'autre. Les manetons partiels 5 sont ensuite complétés à l'aide de manetons partiels 8 complémentaires obtenues également par forgeage assemblés selon un plan d'assemblage 11 parallèle au plan d'assemblage 10.

Les deux pièces ou demi-coquilles 2, 3 sont forgées de manière à être creuses au niveau des manetons et tourillons. Ainsi, on obtient un gain substantiel en poids du vilebrequin final qui possède cependant des « ponts de matière » 9 au niveau des bras 6 servant à maintenir les éléments et à assurer le dimensionnel du vilebrequin 1 lors de l'assemblage des demi-coquilles. Ces « ponts » 9 ont donc la même longueur que les manetons 5 et sont destinés à être tronçonné après assemblage (la partie tronçonnée étant représentée en hachuré à la figure 2). Les perçages des trous de lubrification 12 sont réalisés du type mono entrée/multi sorties.

Chaque partie constituant le vilebrequin 1 selon l'invention est obtenue par estampage. Ainsi, l'acier débité est chauffé par induction pour réaliser l'estampage d'une première demi-coquille 2. Cette demi-coquille 2 subit ensuite un ébarbage. Puis, on effectue une étape de refroidissement contrôlé avant de grenailler ladite demi-coquille 2. On entreprend ensuite une étape de contrôle de l'aspect de cette demi-coquille 2 avant de la soumettre à un contrôle dimensionnel et magnétoscopique. On réalise de même pour la seconde pièce ou demi-coquille 3. On forme également de la même manière quatre pièces correspondant aux manetons partiels 8 de préférence un demi-maneton. De manière avantageuse, le demi-maneton 8 forgé, peut être réalisé creux et dans un matériau identique aux coquilles 2 et 3 ou dans un acier moins couteux. En effet ce demi-maneton est très peu sollicité mécaniquement.

Pour réaliser l'assemblage des éléments, on peut souder les différents éléments par des procédés de soudage connus tels par induction, par résistance, par soudage TIG, ARC ou autre, par friction linéaire. On contrôle l'alignement des éléments au moment du soudage puis on réalise un ébarbage des bourrelets extérieurs du vilebrequin 1 soudé, puis un refroidissement à l'air libre, un contrôle aspect, un contrôle dimensionnel et un contrôle magnétoscopique.

On réalise ensuite les opérations de tronçonnage des ponts puis l'usinage des manetons et tourillons. Pour une meilleure tenue mécanique, le vilebrequin peut être renforcé à l'aide d'opérations de galetage, de nitruration, de grenaillage ou de trempe HF ou par induction.

On obtient ainsi un vilebrequin moins sensible aux défauts de soudure qui présente ainsi un gain en tenue mécanique car la zone soudée n'est pas située dans le plan le plus sollicité. Un tel vilebrequin permet à iso-performance d'obtenir des gains en masse supérieure.

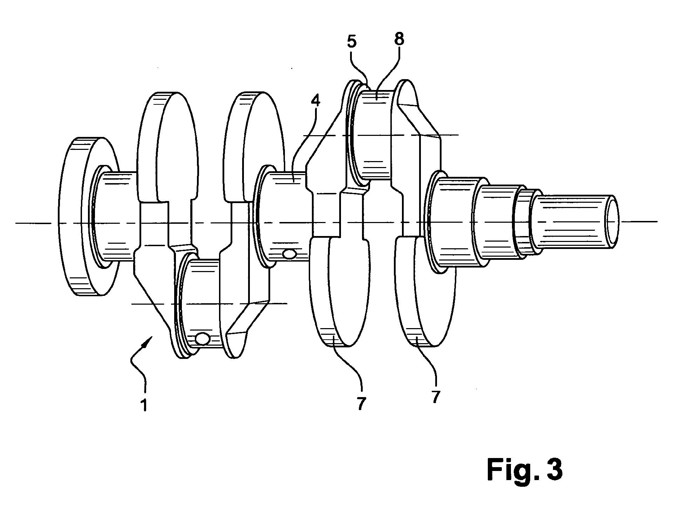

Comme on peut le voir, à la figure 3, un vilebrequin 1 selon l'invention peut être destiné à un moteur à deux cylindres ou tout autre moteur ayant tous les manetons dans un même plan.

L'invention n'est bien entendu nullement limitée aux exemples de réalisation mais englobe les variantes entrant dans le champ de protection de l'invention.

## Revendications

1. Vilebrequin creux présentant un plan de symétrie axial, constitué d'au moins deux pièces principales (2, 3) obtenues par forgeage et assemblées par soudage selon l'axe longitudinal du vilebrequin (1), **caractérisé en ce que** les deux pièces principales (2, 3) sont creuses et assemblées l'une à l'autre selon un plan (10) longitudinal et perpendiculaire au plan de symétrie axial (x, x') du vilebrequin (1), chaque pièce comportant au moins un demi-tourillon (4), au moins un contrepoids (7) et au moins un maneton partiel (5), un maneton partiel complémentaire (8) étant assemblé sur chaque maneton partiel (5) des pièces principales (2, 3) selon un plan d'assemblage (11) s'étendant parallèlement au plan d'assemblage (10) des pièces principales.

2. Vilebrequin selon la revendication 1, **caractérisé en ce qu'**il est en acier.

3. Vilebrequin selon l'une des revendications 1 et 2, **caractérisé en ce que** un maneton partiel correspond à un demi-maneton (5) et le maneton partiel complémentaire correspond à un demi-maneton complémentaire (8).

4. Procédé de fabrication d'un vilebrequin selon l'une des revendications 1 et 2, dans lequel on réalise par estampage deux pièces principales creuses (2, 3) comportant chacune au moins un demi-tourillon (4), au moins un contrepoids (7) et au moins un maneton partiel (5) de sorte que lesdites pièces (2, 3) sont assemblables l'une à l'autre selon un plan d'assemblage perpendiculaire au plan de symétrie axiale du vilebrequin, on assemble lesdites pièces principales (2, 3) selon ledit plan d'assemblage, et on assemble sur chaque maneton partiel (5) un maneton partiel complémentaire (8) obtenu par estampage également selon un plan d'assemblage (11) s'étendant parallèlement au plan d'assemblage (10) des pièces principales (2, 3)

5. Procédé selon la revendication 4, **caractérisé en ce que**, lorsqu'il y a des ponts de matière (9) au niveau des bras (6) servant à maintenir les éléments et à assurer le dimensionnel du vilebrequin (1) lors de l'assemblage des demi-coquilles, ils sont tronçonnés après assemblage des deux pièces (2, 3).

6. Moteur pour véhicule automobile, **caractérisé en ce qu'**il comporte un vilebrequin selon l'une des revendications 1 et 2.

7. Véhicule automobile **caractérisé en ce qu'**il comporte un moteur selon la revendication 6.

## Patentansprüche

1. Hohle Kurbelwelle, die eine axiale Symmetrieebene umfasst, und die sich zumindest aus zwei Hauptteilen (2, 3) zusammensetzt, die man durch Schmieden erhält, und die durch eine Schweißnaht entlang der Längsachse der Kurbelwelle (1) zusammengesetzt werden, **dadurch gekennzeichnet, dass** die beiden Hauptteile (2, 3) hohl sind, und entlang einer längs verlaufenden (10) und zur axialen Symmetrieebene (x, x') der Kurbelwelle (1) senkrechten Ebene miteinander verbunden werden, wobei jedes Teil zumindest einen Halbwellenzapfen der Kurbelwelle (4), zumindest eine Ausgleichsmasse (7) und zumindest einen Teilhubzapfen (5) umfasst, wobei ein ergänzender Teilhubzapfen (8) in einer Montageebene (11) an jedem Teilhubzapfen (5) der Hauptteile (2, 3) montiert wird, die sich parallel zur Montageebene (10) der Hauptteile erstreckt.

2. Kurbelwelle nach Anspruch 1, **dadurch gekennzeichnet, dass** sie aus Stahl gefertigt ist.

3. Kurbelwelle nach einem der Ansprüche 1 und 2, **dadurch gekennzeichnet, dass** ein Teilhubzapfen einem Halbhubzapfen (5) entspricht, und der ergänzende Teilhubzapfen einem ergänzenden Halbhubzapfen (8) entspricht.

4. Verfahren zum Herstellen einer Kurbelwelle nach einem der Ansprüche 1 und 2, bei dem man durch Pressen zwei hohle Hauptteile (2, 3) herstellt, die jeweils zumindest einen Halbwellenzapfen (4), zumindest eine Ausgleichsmasse (7) und zumindest einen Teilhubzapfen (5) umfassen, sodass die besagten Teile (2, 3) in einer zur axialen Symmetrieebene der Kurbelwelle senkrechten Montageebene miteinander verbunden werden können, bei dem man die besagten Hauptteile (2, 3) entlang der besagten Montageebene verbindet, und man an jedem Teilhubzapfen (5) einen ergänzenden Teilhubzapfen (8) montiert, den man durch Pressen ebenfalls gemäß einer Montageebene (11) erhält, die sich parallel zur Montageebene (10) der Hauptteile (2, 3) erstreckt.

5. Verfahren nach Anspruch 4, **dadurch gekennzeichnet, dass**, wenn beim Zusammenfügen der Halbschalen Materialbrücken (9) im Bereich der Arme (6) auftreten, die zum Festhalten der Elemente und zur Bemessung der Kurbelwelle (1) dienen, diese nach dem Zusammenfügen der beiden Teile (2, 3) gekappt werden.

6. Kraftfahrzeugmotor, **dadurch gekennzeichnet, dass** er eine Kurbelwelle nach einem der Ansprüche 1 und 2 enthält.

7. Kraftfahrzeug, **dadurch gekennzeichnet, dass** es einen Motor nach Anspruch 6 enthält.

## Claims

1. Hollow crankshaft having an axial symmetry plane, consisting of at least two main parts (2, 3) obtained by forging and assembled by welding along the longitudinal access of the crankshaft (1), **characterised in that** the two main parts (2, 3) are hollow and assembled with each other along a longitudinal plane (10) perpendicular to the axial symmetry plane (x, x') of the crankshaft (1), each part comprising at least one half journal (4), at least one counterweight (7) and at least one partial crank pin (5), a complementary partial crank pin (8) being assembled on each partial crank pin (5) of the main parts (2, 3) on an assembly plane (11) extending parallel to the assembly plane (10) of the main parts.

2. Crankshaft according to claim 1, **characterised in that** it is made from steel.

3. Crankshaft according to one of claims 1 and 2, **characterised in that** a partial crank pin corresponds to a half crank pin (5) and the complementary partial crank pin corresponds to a complementary half crank pin (8).

4. Method for manufacturing a crank pin according to one of claims 1 and 2, in which there are produced by stamping two hollow main parts (2, 3) each comprising at least one half journal (4), at least one counterweight (7) and at least one partial crank pin (5) so that said parts (2, 3) can be assembled with each other along an assembly plane perpendicular to the axial symmetry plane of the crankshaft, said main parts (2, 3) are assembled along said assembly plane, and there is assembled on each partial crank pin (5) a complementary partial crank pin (8) obtained by stamping also along an assembly plane (11) extending parallel to the assembly plane (10) of the main parts (2, 3).

5. Method according to claim 4, **characterised in that**, when there are bridges of material (9) at the arms (6) serving to hold the elements and to provide the dimensional framework of the crankshaft (1) when the half shells are assembled, they are cut after assembly of the two parts (2, 3).

6. Engine for a motor vehicle, **characterised in that** it comprises a crankshaft according to one of claims 1 and 2.

7. Motor vehicle, **characterised in that** it comprises an engine according to claim 6.
